# EUROPÄISCHE PATENTSCHRIFT

(11) **EP 2 742 087 B1**
(45) Veröffentlichungstag und Bekanntmachung des Hinweises auf die Patenterteilung: **17.06.2015**
(21) Anmeldenummer: 12740546.2
(22) Anmeldetag: 18.07.2012
(51) Int. Cl.: C08G 77/14

(54) **VERFAHREN ZUR HERSTELLUNG VON POLY(HYDROXYMETHYL)-FUNKTIONELLEN SILOXANEN UND KIESELGELEN**
METHOD FOR PREPARING POLY(HYDROXY)METHYL-FUNCTIONAL SILOXANES AND SILICA GELS
PROCÉDÉ DE PRODUCTION DE SIXOLANES À FONCTION POLY(HYDROXYMÉTHYLE) ET DE GELS DE SILICE

(30) Priorität: 12.08.2011 DE 102011080888
(43) Veröffentlichungstag der Anmeldung: 18.06.2014
(73) Patentinhaber: Wacker Chemie AG, 81737 München (DE)
(72) Erfinder: HOFFMANN, Florian, 81479 München (DE); ERHARDT, Sascha, André, 88400 Biberach (DE); RIEGER, Bernhard, 89275 Elchingen (DE); STOHRER, Jürgen, 82049 Pullach (DE)
(74) Vertreter: Fritz, Helmut
(86) Internationale Anmeldenummer: PCT/EP2012/064053
(87) Internationale Veröffentlichungsnummer: WO 2013/023862

(56) Entgegenhaltungen:
- WO-A1-02/070586
- DE-A1-102009 046 254

## Beschreibung

Die vorliegende Erfindung betrifft ein Verfahren zur Herstellung von poly(hydroxymethyl)-funktionellen Siloxanen und poly(hydroxymethyl)-funktionelle Siloxane.

Poly(hydroxyalkyl)-funktionelle Siloxane, einschließlich Polysiloxane, Polysiloxanharze und organofunktionelle Kieselgele besitzen als Strukturelement mehrere Einheiten der Formel

(Siloxan-O) ₁₊ₓSiRⁱ₂₋ₓ-Rⁱⁱ-OH,

wobei Rⁱ ein Alkyl- oder ein Arylrest, in der Regel ein Methylrest, Rⁱⁱ ein Kohlenwasserstoffrest, der Heteratome enthalten oder mit Heteroatomen substituiert sein kann und der über ein Kohlenstoffatom an das Siliciumatom in der Gruppe SiRⁱ₂₋ₓ gebunden ist, und x = 0, 1 oder 2 ist.

Siloxane, Polysiloxane, Polysiloxanharze und organofunktionelle Kieselgele werden im Folgenden zusammenfassend als "Siloxane" bezeichnet. Unter "Heteroatom" wird jedes Atom außer Kohlenstoff und Wasserstoff verstanden, insbesondere Stickstoff, Sauerstoff, Halogen, Silicium, Phosphor und Schwefel.

Die Anwesenheit von Rⁱⁱ zwischen dem Siliciumatom und der dargestellten OH-Gruppe bewirkt, daß die OH-Gruppe hydrolysestabil an das Siloxangerüst gebunden ist. Wird die OH-Gruppe mit anderen Verbindungen umgesetzt, z.B. in Polyadditionsreaktionen mit beispielsweise Isocyanaten oder in Polykondensationsreaktionen mit beispielsweise Carbonsäuren, so sind die resultierenden Produkte ebenfalls hydrolysestabil an das Siloxangerüst gebunden.

Die Gruppe Rⁱⁱ ist dabei ein strukturgebender Faktor, der sowohl die Eigenschaften des poly(hydroxyalkyl)-funktionellen Siloxans als auch die Eigenschaften von Folgeprodukten mitbestimmt. Vor allem sowohl die Beweglichkeit von Rⁱⁱ als auch der organische Charakter von Rⁱⁱ beeinflussen diese Eigenschaften (z.B. Härte, Brennbarkeit oder Hydrophilie). Wenn beispielsweise die Beweglichkeit von Rⁱⁱ und/oder der organische Charakter eines poly(hydroxyalkyl)-funktionellen Siloxans oder seiner Folgeprodukte gering gehalten werden sollen, so sind möglichst kleine Reste Rⁱⁱ ideal, insbesondere vorteilhaft ist die Wahl von Rⁱⁱ gleich CH₂. Ein weiterer Vorteil dieser Wahl für Rⁱⁱ ist, daß kleine Struktureinheiten geringere Reaktionsvolumina bei gleicher Stoffmenge an Rⁱⁱ-gebundenen OH-Gruppen und damit erhöhte Raumzeitausbeuten sowohl bei der Herstellung der poly(hydroxyalkyl)-funktionellen Siloxane als auch ihrer Folgeprodukte mit sich bringen. Die CH₂-Gruppe ist insofern die effizientestmögliche Lösung.

Darüberhinaus ist die CH₂-Gruppe ebenfalls die vorteilhafteste Lösung, wenn die Hydrophilie des poly(hydroxyalkyl)-funktionellen Siloxans möglichst groß sein soll. Gegenüber Si-OH-Gruppen hat die Si-CH₂-OH-Einheit den Vorteil, daß keine Kondensationsreaktionen untereinander auftreten können, die das Si-O-Gerüst des poly(hydroxyalkyl)-funktionellen Siloxans verändern. Der Grad der Hydrophilie kann über die Anzahl der Hydroxyalkyl-Reste gesteuert werden und kann bis zur Wasserlöslichkeit reichen. Auf diese Weise kann Siloxanen eine Eigenschaft verliehen werden, die in dieser Stoffklasse sonst nur schwierig erzielbar ist.

Poly(hydroxyalkyl)-funktionelle Siloxane, bei denen Rⁱⁱ gleich CH₂ ist, werden im Folgenden poly(hydroxymethyl)-funktionelle Siloxane genannt.

Verfahren zur Herstellung von poly(hydroxyalkyl)-funktionellen Siloxanen sind in der Literatur dokumentiert. Beispielsweise beschreibt US 3879433 die Darstellung poly(hydroxyalkyl)-funktioneller Siloxane durch Hydrosilylierung von Hydroxyolefinen. Auf diese Weise sind jedoch nur Hydroxyalkyl-Gruppen mit mindestens drei Kohlenstoff-Atomen zugänglich.

Die Herstellung von poly(hydroxymethyl)-funktionellen Siloxanen ist möglich durch sauer katalysierte Alkoholyse entsprechender poly(acyloxy)methyl-funktioneller Siloxane (z.B. DE 879839) bzw. (Acyloxy)methyl-Silane (z.B. DE 1236505), im letzteren Fall kombiniert mit Cohydrolyse und Cokondensation mit weiteren Silanen.

Für die Einführung endständiger oder einzelner seitenständiger Hydroxymethyl-Gruppen in Siloxan-Moleküle sind zusätzliche Verfahren beschrieben:
- DE 879839: sauer bzw. basisch katalysierte Äquilibrierung von 1,3-Bis(acyloxymethyl)-tetramethyl-disiloxan mit weiteren Silanen bei gleichzeitiger alkoholytischer Esterspaltung,
- US 2837550 / J. Am. Chem. Soc. 77 (1955) 5180: Grignardierung von Chlormethylsiloxanen und anschließende Oxidation und Hydrolyse,
- DE 1213406: Hydroxylierung von Brommethyl-Siloxanen mit Metallhydroxiden,
- DE 1227456: sauer katalysierte Äquilibrierung von 1,3-Bis(hydroxymethyl)-tetramethyl-disiloxan mit weiteren Silanen,
- DE 1233395: reduktive Spaltung von (Acyloxy)methyl-Siloxanen mit Boranaten in Gegenwart von Bortrifluorid,
- DE 102009046254 und DE 10109842: Umsetzung endständig OH-funktioneller Polysiloxane mit cyclischen oder acyclischen Alkoxysilanen.

Die bisher beschriebenen Verfahren zur Herstellung von (hydroxymethyl)-funktionellen Siloxanen haben mehrere Nachteile:
1. Unter den beschriebenen Reaktionsbedingungen, insbesondere bei den Äquilibrierungsverfahren, treten leicht Umlagerungen des Siloxangerüstes ein, so daß die Verfahren nicht zu definierten Produkten führen (DE 879839, DE 1236505, DE 1213406, DE 1227456, DE 1233395).
2. Grignard-Verbindungen sind wegen des benötigten Magnesium-Metalls kostenintensiv. Die Oxidationsreaktion ist stark exotherm und daher in technischem Maßstab schwierig zu handhaben und nicht ungefährlich. Hydroxymethyl-Gruppen entstehen darüberhinaus nur in geringer Ausbeute (US 2837550).
3. Die Freisetzung der ≡SiCH₂OH-Gruppen aus den entsprechenden Vorläuferverbindungen (z.B. ≡SiCH₂-OAcyl oder ≡SiCH₂-Halogen) verläuft häufig nicht quantitativ (DE 879839, US 2837550, DE 1236505, DE 1213406, DE 1227456, DE 1233395).
4. Boranate sind kostspielige und ebenso wie Bortrifluorid nicht ungefährliche Reagenzien (DE 1233395).
5. Die entstandenen ≡SiCH₂OH-Gruppen reagieren unter den Reaktionsbedingungen weiter (z.B. mit HCl zu ≡SiCH₂Cl-Gruppen, mit sauren Katalysatoren, z.B. Schwefelsäure, zu ≡SiCH₂OCH₂Si≡-Gruppen oder mit Hydroxiden unter Spaltung der Si-C-Bindung der SiCH₂OH-Gruppen zu Si-OH-Gruppen), so daß das Produkt nicht die theoretisch zu erwartende Anzahl bzw. Konzentration an ≡SiCH₂OH-Gruppen aufweist (DE 879839, DE 1236505, DE 1213406, DE 1227456, DE 1233395).
6. Reagenzienreste und/oder Katalysatorreste im Produkt führen häufig zu Umlagerung, Spaltung, Kondensation oder Äquilibrierung des Siloxangerüstes, so daß sich die Eigenschaften von hydroxymethyl-funktionellen Siloxanen, die nach den bisher beschriebenen Verfahren hergestellt wurden, häufig während der Lagerung verändern (DE 879839, DE 1236505, DE 1213406, DE 1227456, DE 1233395).
7. Die Verfahren liefern nur endständige und damit in ihrer Anzahl limitierte Hydroxymethyl-Gruppen (DE 1227456, DE 102009046254).

All dies erschwert oder verhindert die Herstellung poly-(hydroxymethyl)-funktioneller Siloxane und ihre weitere Umarbeitung zu definierten Folgeprodukten, dies gilt vor allem für Folgeumsetzungen an der SiCH₂OH-Gruppe.

Die Herstellung von poly(hydroxymethyl)-funktionellen Kieselgelen ist beschrieben durch Hydrolyse von Hydroxymethyltrialkoxysilanen:
- JP 63048364: Cohydrolyse mit weiteren Silanen zur Oberflächenbeschichtung,
- DE 4407437: Sol-Gel-Hydrolyse zur Herstellung dünner Schichten,
- US 6310110: Emulsionshydrolyse in Gegenwart von oberflächenaktiven Substanzen mit Templat-Gruppen zur Herstellung mikro- bzw. nano-strukturierter poröser Partikel,
- US 2007 0269662: Sol-Gel-Hydrolyse zur Herstellung dünner Membranen,
- US 2008 0268162: Hydrolyse, gegebenenfalls in Gegenwart von oberflächenaktiven Substanzen, zur Oberflächenbeschichtung,
- J. Coll. Interface Sc. 340 (2009) 202-208: Sol-Gel-Cohydrolyse mit einem weiteren Silan in Gegenwart einer oberflächenaktiven Substanz zur Herstellung von Partikeln mit Kern-Schale-Struktur,
- DE 10044635: Cohydrolyse zur Verkapselung von Wirkstoffen.

Den genannten Verfahren ist gemein, daß sie als Ausgangsstoff eine alkoholische Lösung eines Hydroxymethyltrialkoxysilans verwenden. Diese enthält im Gleichgewicht auch Kondensationsprodukte mit Si-CH₂-O-Si-Einheiten, und zwar umso mehr, je höher die Silan-Konzentration ist (DE 4407437). Dies ist nachteilig, weil bei hohem Kondensationsgrad keine vollständige Hydrolyse mehr gewährleistet ist, da auf Grund der daraus resultierenden starken Vernetzung und sterischen Abschirmung nicht mehr alle Si-OR- bzw. Si-CH₂-O-Si-Einheiten einer Hydrolyse zugänglich sind. Arbeitet man in hoher alkoholischer Verdünnung, um dies zu vermeiden, kann dies ebenfalls nachteilig sein, da keine freie Wahl von Silan-Konzentration bzw. Lösungsmittel mehr möglich ist. Dies sind jedoch wichtige Parameter zur Steuerung von Größe und Morphologie resultierender Kieselgel-Partikel.

All dies erschwert oder verhindert die Herstellung poly-(hydroxymethyl)-funktioneller Kieselgele, insbesondere mit definierter Struktur und Morphologie, und ihre weitere Umarbeitung zu definierten Folgeprodukten, dies gilt vor allem für Folgeumsetzungen an der SiCH₂OH-Gruppe.

Die Aufgabe der Erfindung ist daher, den Stand der Technik zu verbessern und ein Verfahren zur Herstellung von poly(hydroxymethyl)-funktionellen Siloxanen und Kieselgelen bereitzustellen, das unabhängig von Silan-Konzentration und Lösungsmittel eine vollständige Hydrolyse gewährleistet.

Gegenstand der Erfindung ist ein Verfahren zur Herstellung von poly(hydroxymethyl)-funktionellen Siloxanen der allgemeinen Formel I

(SiO_{4/2})ₖ(R¹SiO_{3/2})ₘ(R¹₂SiO_{2/2})ₚ(R¹₃SiO_{1/2})_{q}(O_{1/2}H)ₜ [(O_{1/2})_{2+y}SiR²_{1-y}-CH₂-OH]ₛ Formel I,

bei dem cyclische Verbindungen, die mindestens eine Einheit der allgemeinen Formel II

[SiR²(OR³)-CH₂-O]ₙ Formel II

aufweisen, mit Wasser umgesetzt werden, wobei optional eine oder mehrere weitere hydrolysierbare Verbindungen der allgemeinen Formel III

R¹_{3-z}SiY_{1+z} Formel III

anwesend sein können, und wobei
- **R¹**: ein Wasserstoffatom oder ein gegebenenfalls mit **Q¹** substituierter, gegebenenfalls durch eine oder mehrere Gruppen **Q²** unterbrochener oder eine oder mehrere Gruppen **Q²** enthaltender, cyclischer oder acyclischer, linearer oder verzweigter, aromatischer oder aliphatischer oder olefinischer, gesättigter oder ungesättigter C₁-C₂₀ Kohlenwasserstoffrest oder C₁-C₂₀ Kohlenwasserstoffoxyrest oder C₄-C₄₀ Polyetherrest ist,
- **R²**: ein gegebenenfalls mit **Q¹** substituierter, gegebenenfalls durch eine oder mehrere Gruppen **Q²** unterbrochener oder eine oder mehrere Gruppen **Q²** enthaltender, cyclischer oder acyclischer, linearer oder verzweigter, aromatischer oder aliphatischer oder olefinischer, gesättigter oder ungesättigter C₁-C₂₀ Kohlenwasserstoffrest oder C₁-C₂₀ Kohlenwasserstoffoxyrest oder C₄-C₄₀ Polyetherrest oder Si₁-Si₂₀ Siloxanoxyrest oder Hydroxy-Rest ist,
- **R³**: ein gegebenenfalls mit **Q¹** substituierter, gegebenenfalls durch eine oder mehrere Gruppen **Q²** unterbrochener oder eine oder mehrere Gruppen **Q²** enthaltender, cyclischer oder acyclischer, linearer oder verzweigter, aromatischer oder aliphatischer oder olefinischer, gesättigter oder ungesättigter C₁-C₂₀ Kohlenwasserstoffrest oder C₄-C₄₀ Polyetherrest oder Si₁-Si₂₀ Siloxanylrest oder Wasserstoff ist,
- **Q¹**: ein heteroatomhaltiger einbindiger Rest ist,
- **Q²**: ein heteroatomhaltiger zweibindiger Rest oder ein heteroatomhaltiger dreibindiger Rest ist,
- **Y**: eine über ein Heteroatom an das Silicium gebundene hydrolysierbare Gruppe bedeutet,
- **k, m, p, q** und **t**: größer oder gleich Null sind,
- **s** und **n**: größer als Null sind,
- **y**: den Wert 0 oder 1, und
- **z**: die Werte 0, 1, 2 oder 3 bedeutet.

Hydrolysiert man Verbindungen, die Einheiten der allgemeinen Formel II enthalten, d.h., geeignete cyclische Alkoxysilane, gegebenenfalls in Gegenwart von hydrolysierbaren Verbindungen der Formel III, so entstehen überraschend leicht und gezielt mit guten Ausbeuten poly(hydroxymethyl)-funktionelle Siloxane.

Der Ausdruck "poly(hydroxymethyl)-funktionelle Siloxane" umfaßt auch Polysiloxane, Polysiloxanharze und Kieselgele.

Verbindungen, die mindestens eine Einheit der allgemeinen Formel II aufweisen, werden im Folgenden vereinfachend "Verbindungen der Formel II" genannt.

Die Einheiten (SiO_{4/2}), (R¹SiO_{3/2}) und (R¹₂SiO_{2/2}) in Formel I können auch beispielsweise mehrfach wiederholt, als Blöcke, als einzelne oder als alternierende Einheiten auftreten.

Die Einheiten (R¹₃SiO_{1/2}), [(O_{1/2})_{2+y}SiR²_{1-y}-CH₂-O-H] und [O_{1/2}H] in Formel I können beispielsweise an mehreren Stellen des Polymerrückgrats, beispielsweise geordnet oder statistisch verteilt, auftreten.

Die Variable **y** kann in Verbindungen der allgemeinen Formel I in jedem der s Segmente [(O_{1/2})_{2+y}SiR²_{1-y}-CH₂-OH] einen anderen Wert annehmen.

Die Einheiten [SiR²(OR³)-CH₂-O] in Formel II können auch beispielsweise mehrfach wiederholt, als Blöcke, als einzelne oder als alternierende Einheiten auftreten, wenn **R²** und **R³** nicht in allen Einheiten die gleiche Bedeutung annehmen.

Die Verbindungen der Formeln II und III oder Gemische enthaltend diese Verbindungen sowie Wasser können bei dem erfindungsgemäßen Verfahren in jedweder Reihenfolge zubereitet, gemischt und zueinander dosiert werden, gegebenenfalls auch mehrfach wiederholend, gegebenenfalls auch abwechselnd. Bei dem erfindungsgemäßen Verfahren wird mindestens eine Verbindung der Formel II eingesetzt; es können auch zwei oder mehrere Verbindungen der Formel II eingesetzt werden, gleichzeitig oder nacheinander, gegebenenfalls auch mehrfach wiederholend, gegebenenfalls auch abwechselnd. Optional können zusätzlich eine, zwei, drei, vier, fünf, sechs oder mehrere Verbindungen der Formel III eingesetzt werden, gleichzeitig oder nacheinander, gegebenenfalls auch mehrfach wiederholend, gegebenenfalls auch abwechselnd. Bei dem erfindungsgemäßen Verfahren wird mindestens ein poly(hydroxymethyl)-funktionelles Siloxan der Formel I hergestellt; es können auch zwei oder mehrere Verbindungen der Formel I nebeneinander hergestellt werden. Das Verhältnis von **k, m, p, q, t** und **s** zueinander wird dabei durch die eingesetzten Stoffmengen von Verbindungen der Formeln II und III gesteuert.

Werden Verbindungen der Formel II mit Verbindungen der Formel III in einem anderen Stoffmengenverhältnis als dem für Verbindungen der Formel I notwendigen umgesetzt, so können unterschüssige Komponenten zu einem späteren Zeitpunkt in beliebiger Reihenfolge nachdosiert werden, gegebenenfalls in mehreren Portionen, bis das gewünschte Stoffmengenverhältnis erreicht ist.

Verbindungen der Formel II erfordern für eine vollständige Hydrolyse pro Mol Einheiten [SiR²(OR³)-CH₂-O] 1 mol Wasser, wenn **R²** nicht hydrolysierbar ist, und 1,5 mol Wasser, wenn **R²** ein hydrolysierbarer Rest ist. Verbindungen der Formel III erfordern für eine vollständige Hydrolyse pro Mol R¹_{3-z}SiY_{1+z} 0,5 mol, 1 mol, 1,5 mol bzw. 2 mol Wasser, wenn **z** = 0, 1, 2 bzw. 3 ist. Wird weniger als die stöchiometrisch erforderliche Menge an Wasser eingesetzt, entstehen nur teilhydrolysierte Produkte. Vorzugsweise wird im erfindungsgemäßen Verfahren mindestens die für eine vollständige Hydrolyse erforderliche Menge an Wasser eingesetzt, bevorzugt mehr als die erforderliche Menge.

Bei der Hydrolyse entstehen als Nebenprodukte aus den OR³-Gruppen und gegebenenfalls aus den R²-Gruppen, wenn **R²** eine hydrolysierbare Gruppe ist, Alkohole R³OH sowie gegebenenfalls Alkohole R²H, die in der Reaktionsmischung verbleiben oder aus ihr, beispielsweise durch Destillation, entfernt werden können.

Aus den Y-Gruppen der Verbindungen der Formel III bilden sich bei der Hydrolyse Verbindungen YH, die in der Reaktionsmischung verbleiben oder aus ihr, beispielsweise durch Destillation, entfernt werden können. Ist YH eine Säure, kann sie durch Zusatz einer Base neutralisiert werden. Das gebildete Reaktionsprodukt, beispielsweise ein Salz, kann in der Reaktionsmischung verbleiben oder aus ihr, beispielsweise durch Extraktion oder Filtration, entfernt werden. Die Base kann vor, während oder nach der Hydrolyse-Reaktion zugesetzt werden. Ist YH eine Base, kann sie durch Zusatz einer Säure neutralisiert werden. Das gebildete Reaktionsprodukt, beispielsweise ein Salz, kann in der Reaktionsmischung verbleiben oder aus ihr, beispielsweise durch Extraktion oder Filtration, entfernt werden. Die Säure kann vor, während oder nach der Hydrolyse-Reaktion zugesetzt werden.

Damit unterscheidet sich das erfindungsgemäße Verfahren von den bisher bekannten Verfahren zur Herstellung von poly-(hydroxymethyl)-funktionellen Siloxanen bzw. Kieselgelen.

Bei den bisher bekannten Verfahren zur Herstellung von poly-(hydroxymethyl)-funktionellen Siloxanen werden als Vorstufe Siloxane eingesetzt oder erzeugt, die eine Gruppierung der Struktur Siloxan-CH₂-A tragen. Die Gruppe A stellt dabei einen Acyloxyrest oder ein Halogenatom dar und wird unter harschen Bedingungen, beispielsweise mit Alkalimetallhydroxiden (A = Halogen) oder mit Alkoholen unter Säurekatalyse oder mit Borhydriden (A = Acyloxy) in OH-Gruppen umgearbeitet. Die harschen Reaktionsbedingungen führen häufig zu Umlagerungen des Siloxangerüsts oder zu ungewollten Folgereaktionen an den erzeugten Hydroxymethyl-Gruppen wie beispielsweise Spaltung von Si-C-Bindungen. Im Unterschied dazu gelingt nach dem erfindungsgemäßen Verfahren die Herstellung von poly(hydroxymethyl)-funktionellen Siloxanen überraschend leicht, unter milden Bedingungen und ohne Folgereaktionen an den erzeugten Hydroxymethyl-Gruppen.

Bei den bisher bekannten Verfahren zur Herstellung von poly-(hydroxymethyl)-funktionellen Kieselgelen werden Hydroxymethyltrialkoxysilane eingesetzt, die bei hoher Konzentration oligomerisiert bzw. polymer vorliegen, so daß keine vollständige Hydrolyse gewährleistet ist. Außerdem ist ein Alkohol als zumindest überwiegendes Lösungsmittel notwendig. Im Unterschied dazu gelingt nach dem erfindungsgemäßen Verfahren die Herstellung von vollständig hydrolysierten poly(hydroxymethyl)-funktionellen Kieselgelen überraschend leicht und unter milden Bedingungen.

Die nach dem erfindungsgemäßen Verfahren erzeugten poly-(hydroxymethyl)-funktionellen Siloxane können noch SilanolGruppen enthalten. Diese können beispielsweise nach einem in DE 102009046254 beschriebenen Verfahren mit Silylierungsmitteln umgesetzt werden, wobei silanol-ärmere oder silanol-freie poly(hydroxymethyl)-funktionelle Siloxane entstehen. Sie können ebenso nach einem anderen in DE 102009046254 beschriebenen Verfahren zu weiteren, endständigen Hydroxymethyl-Gruppen umgesetzt werden, so daß silanol-ärmere oder silanol-freie, überwiegend oder auschließlich hydroxymethyl-funktionalisierte poly(hydroxymethyl)-funktionelle Siloxane erzeugt werden können. Dies kann auch gleichzeitig mit oder vor Durchführung des erfindungsgemäßen Verfahrens geschehen. Zu diesem Zweck können die eingesetzten Verbindungen der Formel II auch Einheiten [SiR²₂-CH₂-O] enthalten, die zu endständigen Hydroxymethyl-Gruppen führen.

Gegenstand der Erfindung sind ferner poly(hydroxymethyl)-funktionelle Siloxane der allgemeinen Formel Ia

(SiO_{4/2})ₖ(R¹SiO_{3/2})ₘ(R¹₂SiO_{2/2})ₚ(R¹₃SiO_{1/2})ᵤ[O_{1/2}H]ᵥ (O_{1/2}SiR²²₂-CH₂-OH)₁[(O_{1/2})_{2+y}SiR²_{1-y}-CH₂-OH]ₛ Formel Ia,

wobei
- **R¹, R², Q¹, Q², k, m, p, y** und **s**: Bedeutungen und Werte annehmen können wie oben definiert,
- **R²²**: einen gegebenenfalls mit **Q¹** substituierten, gegebenenfalls durch eine oder mehrere Gruppen **Q²** unterbrochenen oder eine oder mehrere Gruppen **Q²** enthaltenden, cyclischen oder acyclischen, linearen oder verzweigten, aromatischen oder aliphatischen oder olefinischen, gesättigten oder ungesättigten C₁-C₂₀ Kohlenwasserstoffrest oder C₁-C₂₀ Kohlenwasserstoffoxyrest oder C₄-C₄₀ Polyetherrest bedeutet,
- **l**: größer als Null ist
- **u** und **v**: größer oder gleich Null sind
und das Verhältnis von s zur Summe von k, m, p und u im Bereich 1:10 000 bis 10000:1 liegt.

Die Variable **y** kann in Verbindungen der allgemeinen Formel Ia in jedem der **s** Segmente [(O_{1/2})_{2+y}SiR²_{1-y}-CH₂-OH] einen anderen Wert annehmen.

Verbindungen der Formel Ia gehen aus Verbindungen der Formel I hervor, indem in zumindest einem Teil der Segmente (R¹₃SiO_{1/2}) zwei Reste **R¹** die Bedeutung **R²²** und ein Rest **R¹** die Bedeutung Hydroxymethyl annimmt, **q** den Wert **u** und **t** den Wert **v** annimmt.

**R¹, R², Q¹, Q², k, m, p, y** und **s** nehmen in Verbindungen der Formel Ia vorzugsweise, bevorzugt bzw. besonders bevorzugt die bei Verbindungen der Formel I als vorzugsweise, bevorzugt bzw. besonders bevorzugt beschriebenen Bedeutungen an. **R²²** nimmt vorzugsweise, bevorzugt bzw. besonders bevorzugt die für **R²** als vorzugsweise, bevorzugt bzw. besonders bevorzugt beschriebenen Bedeutungen an.

**u, v** bzw. **1** nehmen vorzugsweise, bevorzugt bzw. besonders bevorzugt die für **q, t** bzw. **s** als vorzugsweise, bevorzugt bzw. besonders bevorzugt beschriebenen Bedeutungen an.

Das erfindungsgemäße Verfahren bietet die Möglichkeit, poly-(hydroxymethyl)-funktionelle Siloxane unter milden Bedingungen herzustellen. Darüberhinaus hat es den Vorteil, daß der Funktionalisierungsgrad in weiten Grenzen frei wählbar eingestellt werden kann, so daß z.B. die Herstellung von Siloxanen mit einer bestimmten Zahl von SiCH₂OH-Gruppen möglich ist. Diese (Poly)Siloxane eignen sich besonders gut für Polyadditionsreaktionen des Typs A-A + B-B ("A" - SiCH₂OH, "B" = z.B. Isocyanat). Ebenso läßt sich auf diese Weise die Hydrophilie der Siloxane steuern.

**R¹, R²** und **R³** weisen vorzugsweise 1 bis 12 Kohlenstoffatome, insbesondere 1 bis 6 Kohlenstoffatome, vorzugsweise nur Kohlenstoffatome und Wasserstoffatome, oder ein Alkoxysauerstoffatom und sonst nur Kohlenstoffatome und Wasserstoffatome auf. Vorzugsweise sind **R¹** und **R²** geradkettige oder verzweigte oder cyclische C₁-C₆ Kohlenwasserstoffreste oder C₁-C₆ Kohlenwasserstoffoxyreste. Vorzugsweise ist **R³** ein geradkettiger oder verzweigter oder cyclischer C₁-C₆ Kohlenwasserstoffrest. Für **R¹** bevorzugt sind die Reste Methyl, Ethyl, Phenyl, Allyl und Vinyl, besonders bevorzugt ist Methyl. Für **R²** bevorzugt sind die Reste Methyl, Ethyl, Phenyl, Allyl, Vinyl, Methoxy und Ethoxy, besonders bevorzugt sind Methyl, Methoxy und Ethoxy. Für **R³** bevorzugt sind die Reste Methyl, Ethyl, *n*-Propyl, *iso*-Propyl, *n-*Butyl, *sec*-Butyl, *iso*-Butyl, *tert*-Butyl und Phenyl, besonders bevorzugt sind Methyl und Ethyl.

Bevorzugt werden die Verbindungen der allgemeinen Formel I hergestellt, bei denen **R¹** und **R²** Methylreste sind. Bevorzugt werden die Verbindungen der allgemeinen Formel II eingesetzt, bei denen **R²** Methyl-, Methoxy- oder Ethoxy-Reste und **R³** Methyl- oder Ethyl-Reste bedeuten. Bevorzugt werden die Verbindungen der allgemeinen Formel III eingesetzt, bei denen **R¹** MethylReste bedeuten.

**Q¹** steht bevorzugt für einen Fluor-, Chlor-, Brom-, Iod-, Cyanato-, Isocyanato-, Silyl-, Silylalkyl-, Silylaryl-, Siloxy-, Siloxanoxy-, Siloxyalkyl-, Siloxanoxyalkyl-, Siloxyaryl-, Siloxanoxyaryl-, Hydroxy-, Alkoxy-, Aryloxy-, Acyloxy-, Thiolato-, Amino-, Alkylamino-, Arylamino-, Dialkylamino-, Diarylamino-, Arylalkylamino-, Acylamino-, Imido-, Imino-, *O-*Alkyl-*N*-Carbamato, *O*-Aryl-*N*-Carbamato, *N*-Alkyl-*O*-Carbamato, *N-*Aryl-*O*-Carbamato, Hydroxycarbonyl-, Alkoxycarbonyl-, Aryloxycarbonyl- oder cyclischen oder acyclischen Carbonato-, Alkylcarbonato- oder Arylcarbonatosubstituenten.

**Q²** steht bevorzugt für einen heteroatomhaltigen zweibindigen Rest -O-, -S-, -N(R⁴)-, -C(O)-, Epoxy, -C(O)-O-, -O-C(O)-O-, -O-C(O)-N(R⁴)-, -C(O)-N(R⁴)-, -N[C(O)R⁴]-, Silandiyl, Siloxandiyl oder Siloxanoxydiyl, wobei **R⁴** für Wasserstoff oder gegebenenfalls substituierte C₁-C₂₀-Alkyl- oder C₆-C₂₀-Arylreste steht, oder für einen heteroatomhaltigen dreibindigen Rest, wie beispielsweise -N= oder -P=.

**Y** steht bevorzugt für einen Fluor-, Chlor-, Brom-, Iod-, Hydroxy-, Alkoxy-, Aryloxy-, Acyloxy-, Acyl-, Thiolato-, Amino-, Alkylamino-, Arylamino-, Dialkylamino-, Diarylamino-, Arylalkylamino-, Acylamino-, Silylamino-, Imido-, Imino-, Cyano-, Cyanato-, Isocyanato-, *O*-Alkyl-N-Carbamato, *O*-Aryl-*N*-Carbamato, *N*-Alkyl-*O*-Carbamato, *N*-Aryl-*O*-Carbamato, Hydroxycarbonyl-, Alkoxycarbonyl-, Aryloxycarbonyl- oder cyclischen oder acyclischen Carbonato-, Alkylcarbonato- oder Arylcarbonatosubstituenten, insbesondere für eine Hydroxy-Gruppe, AlkoxyGruppe, Acyloxy-Gruppe, gegebenenfalls substituierte AminoGruppe und Chlor.

In Formel II nimmt die Variable **n** vorzugsweise Werte größer oder gleich 2 an, bevorzugt Werte von 2 bis 100, besonders bevorzugt von 2 bis 30, insbesondere von 2 bis 10. Die Variable **n** kann beispielsweise die Werte 2, 3, 4, 5, 6, 7, 8, 9, 10 oder 11-30 oder größer annehmen. Die cyclischen Verbindungen der Formel II können in den Resten **R²** bzw. **R³** weitere Einheiten [SiR²(OR³)-CH₂-O] enthalten.

Das poly(hydroxymethyl)-funktionelle Siloxan der allgemeinen Formel I kann beispielsweise linear, cyclisch oder verzweigt sein. Es kann in einer monomodalen, bimodalen oder multimodalen Molmassenverteilung vorliegen, gleichzeitig kann die Molmassenverteilung eng oder sehr breit sein.

In einer bevorzugten Variante für ein poly(hydroxymethyl)-funktionelles Siloxan sind die Variablen **k, m, p** und **q** Null, so daß die Verbindung I nur aus Einheiten [(O_{1/2})_{2+y}SiR²_{1-y}-CH₂-OH] besteht mit **R², y** und **s** wie oben definiert. Die Variable **s** ist in diesem Fall vorzugsweise eine Zahl von 2 bis 100000, bevorzugt 2 bis 10000, besonders bevorzugt 2 bis 1000. Das Verhältnis von **t** zu **s** ist vorzugsweise kleiner oder gleich 2, bevorzugt kleiner oder gleich 1, insbesondere Null.

In einer anderen bevorzugten Variante für ein poly(hydroxymethyl)-funktionelles Siloxan liegt das Verhältnis von **s** zur Summe von **k, m, p** und **q** vorzugsweise im Bereich 1:10000 bis 10000:1, bevorzugt im Bereich 1:1000 bis 1000:1, besonders bevorzugt im Bereich 1:100 bis 100:1. Das Verhältnis von **t** zu **s** liegt in diesem Fall vorzugsweise im Bereich 0 bis 10000:1, bevorzugt im Bereich 0 bis 1000:1, besonders bevorzugt im Bereich 0 bis 100:1, insbesondere kann **t** gleich Null sein. Die Variable **s** ist vorzugsweise eine Zahl von 2 bis 100000, bevorzugt 2 bis 10000, besonders bevorzugt 2 bis 1000.

Das poly(hydroxymethyl)-funktionelle Kieselgel der allgemeinen Formel I kann beispielsweise massiv, porös, amorph oder kristallin sein, es kann beispielsweise als Formkörper, Gel, Film, Membran, Partikel, Nanopartikel oder Sol erhalten werden. Im Fall von porösen Produkten können deren Porengrößen monomodal, bimodal oder multimodal verteilt sein, gleichzeitig können sie in einer engen oder sehr breiten Porengrößenverteilung vorliegen. Im Fall von Partikeln oder Nanopartikeln können deren Teilchengrößen monomodal, bimodal oder multimodal verteilt sein, gleichzeitig können sie in einer engen oder sehr breiten Teilchengrößenverteilung vorliegen.

In einer bevorzugten Variante für ein poly(hydroxymethyl)-funktionelles Kieselgel sind die Variablen **k, m, p** und **q** Null, so daß die Verbindung I nur aus Einheiten [(O_{1/2})_{2+y}SiR²_{1-y}-CH₂-OH] besteht mit **R², y** und **s** wie oben definiert. **y** ist in diesem Fall vorzugsweise gleich 1. Das Verhältnis von **t** zu **s** ist vorzugsweise kleiner oder gleich 2, bevorzugt kleiner oder gleich 1, insbesondere Null.

In einer anderen bevorzugten Variante für ein poly(hydroxymethyl)-funktionelles Kieselgel liegt das Verhältnis von **s** zur Summe von **k, m, p** und **q** vorzugsweise im Bereich 1:10000 bis 10000:1, bevorzugt im Bereich 1:1000 bis 1000:1, besonders bevorzugt im Bereich 1:100 bis 100:1. Das Verhältnis von **t** zu **s** liegt in diesem Fall vorzugsweise im Bereich 0 bis 10000:1, bevorzugt im Bereich 0 bis 1000:1, besonders bevorzugt im Bereich 0 bis 100:1, insbesondere kann **t** gleich Null sein.

Alle benannten Zahlen, Summen und Verhältnisse beziehen sich auf die Anzahl der im Produkt vorhandenen Monomeren-Einheiten.

Ein bevorzugtes Verfahren zur Herstellung von poly(hydroxymethyl)-funktionellen Siloxanen ist dadurch gekennzeichnet, daß als Verbindungen, die mindestens eine Einheit der Formel II aufweisen, folgende Verbindungen **1** bis **6** eingesetzt werden:

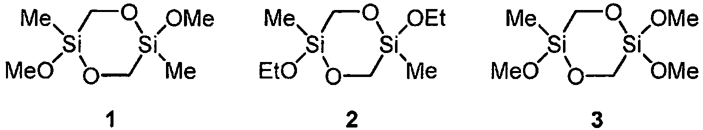

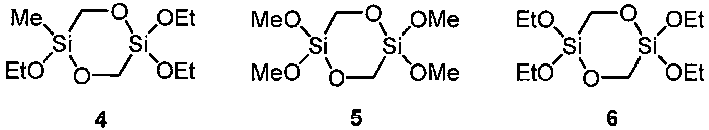

Verbindungen der Formel II, insbesondere die Verbindungen **1-6,** können durch metallkatalysierte Umesterung unter Abspaltung eines niedermolekularen Esters aus geeigneten (Acyloxymethyl)-alkoxysilanen hergestellt werden (DE 102010003108).

Ein bevorzugtes Verfahren zur Herstellung von poly(hydroxymethyl)-funktionellen Siloxanen ist dadurch gekennzeichnet, daß als zusätzliche hydrolysierbare Verbindungen der Formel III Verbindungen nach folgender Formel IIIa

R¹¹_{3-z}Si(OR⁵)_{1+z} Formel IIIa

verwendet werden, wobei **R¹¹** Methyl, Ethyl, Vinyl, Allyl oder Phenyl und **R⁵** Methyl, Ethyl, *n*-Propyl, *iso*-Propyl, *n*-Butyl, *iso*-Butyl, *sec*-Butyl, *tert*-Butyl, Formyl oder Acetyl bedeutet sowie **z** Werte annimmt wie oben definiert.

**R¹¹** bedeutet vorzugsweise Methyl, Ethyl, Vinyl oder Phenyl, bevorzugt Methyl oder Vinyl, besonders bevorzugt Methyl.

**R⁵** bedeutet vorzugsweise Methyl, Ethyl, *n*-Propyl, *n*-Butyl oder Acetyl, bevorzugt Methyl, Ethyl oder Acetyl, besonders bevorzugt Methyl oder Acetyl.

Die vorgenannten Verfahren können vorzugsweise bei Temperaturen von -100°C bis 200 °C durchgeführt werden, bevorzugt bei 0 °C bis 100 °C, besonders bevorzugt bei 0°C bis 50°C, insbesondere von 0 °C bis 30 °C. Die Verfahren können sowohl unkatalysiert als auch katalysiert ausgeführt werden.

Der verwendete Katalysator ist dabei vorzugsweise eine anorganische oder organische Brønstedt-Säure oder Brønstedt-Base oder eine anorganische oder organische Lewis-Säure oder LewisBase.

Als bevorzugte Säuren werden Carbonsäuren, teilveresterte Carbonsäuren, insbesondere Monocarbonsäuren, vorzugsweise Ameisensäure oder Essigsäure, unveresterte oder teilveresterte mono-, oligo- oder Polyphosphorsäuren, Sulfonsäuren, Alkylhydrogensulfate oder saure Ionenaustauscher verwendet. Als bevorzugte Basen kommen vorzugsweise Ammoniak, Amine, Guanidine, Amidine, Alkylammoniumhydroxide oder Metallhydroxide zum Einsatz.

Die verwendeten Katalysatoren können nach der Hydrolyse in der Reaktionsmischung verbleiben oder aus ihr entfernt werden, beispielsweise durch Destillation, Extraktion, Dekantation, Filtration, Zentrifugation, Adsorption oder Fällung. Sie können auch nach der Reaktion chemisch oder physikalisch deaktiviert werden, beispielsweise durch Komplexierung, Neutralisation oder Erhitzen. Das Deaktivierungsprodukt kann in der Reaktionsmischung verbleiben oder aus ihr entfernt werden, beispielsweise mit den eben genannten Methoden. Beispiele für Katalysatoren, die durch Destillation entfernt werden können, sind Carbonsäuren, wie beispielsweise Ameisensäure oder Essigsäure, oder Ammoniak, Aminbasen, Amidinbasen oder Guanidinbasen, wie beispielsweise Triethylamin, Tributylamin, Ethyldiisopropylamin, Ethylendiamin, Tetramethylguanidin, 1,8-Diazabicyclo[5.4.0]undec-7-en, 1,5-Diazabicyclo[4.3.0]non-5-en oder 1,4-Diazabicyclo[2.2.2]octan. Beispiele für Katalysatoren, die durch Dekantation, Filtration oder durch Zentrifugation entfernt werden können, sind heterogene Katalysatoren wie beispielsweise polymergeträgerte Säuren oder Basen, saure oder basische Ionenaustauscher, oder saures oder basisches Aluminiumoxid. Bevorzugt werden Katalysatoren eingesetzt, die sich, beispielsweise durch Destillation (gegebenenfalls im Vakuum), Extraktion oder Filtration leicht aus der Reaktionsmischung entfernen lassen.

Die Verfahren können dabei sowohl mit als auch ohne Verwendung von Lösungsmitteln durchgeführt werden, und zwar sowohl einphasig als auch mehrphasig, beispielsweise als Dispersionshydrolyse. Dabei wird gegebenenfalls unter Vakuum oder unter Überdruck oder bei Normaldruck (0,1 MPa absolut) gearbeitet. Die Verfahren können kontinuierlich oder diskontinuierlich geführt werden.

Als Lösungsmittel können beispielsweise cyclische oder acyclische Kohlenwasserstoffe, Ether, Ester, Alkohole, Amide, Harnstoffderivate oder halogenierte organische Verbindungen oder Lösungsmittelgemische eingesetzt werden. Bei der Verwendung von Lösungsmitteln sind inerte, insbesondere aprotische Lösungsmittel wie aliphatische Kohlenwasserstoffe, wie z.B. Heptan, und aromatische Kohlenwasserstoffe, wie z.B. Toluol, bevorzugt. Ebenfalls können Ether wie Tetrahydrofuran, Diethylether oder Methyl-tert-butylether verwendet werden. Lösungsmittel oder Lösungsmittelgemische mit einem Siedepunkt bzw. Siedebereich von bis zu 120° C bei 0,1 MPa absolut sind bevorzugt.

Das erfindungsgemäße Verfahren kann in Anwesenheit einer oder mehrerer oberflächenaktiver Substanzen durchgeführt werden. Diese Stoffe haben durch die Ausbildung supramolekularer Strukturen, beispielsweise Micellen, einen strukturgebenden Effekt, insbesondere bei der Herstellung poly(hydroxymethyl)-funktioneller Kieselgele. Insbesondere kann, beispielsweise durch einen Templat-Effekt, die Morphologie von Partikeln bzw. Poren beeinflußt werden. Es können sowohl anionische als auch kationische oder nichtionische oberflächenaktive Substanzen eingesetzt werden. Beispiele für anionische oberflächenaktive Substanzen sind Alkylsulfonate, z.B. Natrium-bis-2-ethylhexyl-sulfosuccinat (AOT), Alkylsulfatestersalze, z.B. Natriumdodecylsulfat oder Alkylbenzolsulfonate. Beispiele für nichtionische oberflächenaktive Substanzen sind Polyethylenglykol-Monoether oder Fettsäureester von Polyethern, Polyalkoholen und Zuckern. Beispiele für kationische oberflächenaktive Substanzen sind quartäre Ammoniumsalze, z.B. Hexadecyltrimethylammoniumbromid oder Dimethyldioctadecylammoniumchlorid.

Die nach einem der vorgenannten Verfahren hergestellten poly-(hydroxymethyl)-funktionellen Siloxane können verwendet werden zur Umsetzung mit Isocyanaten, zur Herstellung von Urethanen, Polyurethanen oder Polyurethancopolymeren, zur Umsetzung mit Carbonsäuren oder mit Carbonsäurederivaten, oder zur Herstellung von Estern, Polyestern oder Polyester-Copolymeren. Bei ausreichend hohem Funktionalisierungsgrad können Folgereaktionen an den poly(hydroxymethyl)-funktionellen Siloxanen in Wasser oder wasserhaltigen Lösungsmitteln durchgeführt werden, da diese Stoffe wasserlöslich bzw. leicht in Wasser dispergierbar sind. Die poly(hydroxymethyl)-funktionellen Siloxane können weiterhin verwendet werden, um Oberflächen zu beschichten. Dies kann sowohl während als auch nach der Durchführung des erfindungsgemäßen Verfahrens geschehen.

Alle vorstehenden Symbole der vorstehenden Formeln weisen ihre Bedeutungen, soweit nicht ausdrücklich anders angegeben, jeweils unabhängig voneinander auf.

In den folgenden Beispielen sind, falls jeweils nicht anders angegeben, alle Drücke 0,10 MPa (abs.) und alle Temperaturen 20°C.

### Beispiel 1

### Herstellung einer Verbindung der allgemeinen Formel I

### Unkatalysierte Hydrolyse von 2,5-Dimethoxy-2,5-dimethyl-1,4-dioxa-2,5-disilacyclohexan

5,2 g (25 mmol) 2,5-Dimethoxy-2,5-dimethyl-1,4-dioxa-2,5-disila-cyclohexan (**1**) wurden in 10 ml Methanol gelöst, mit 1 ml (1,0 g, 55,5 mmol) Wasser versetzt und bei Raumtemperatur gerührt. Nach 1,5 h zeigte das ¹H- und ²⁹Si-NMR-Spektrum vollständigen Umsatz an. Das Lösungsmittel und überschüssiges Wasser wurden am Rotationsverdampfer entfernt. Es verblieben 4,6 g (100%) eines farblosen elastischen Feststoffes, der nur in Wasser, Methanol und DMSO löslich war. Er bestand lt. Massenspektrum aus cyclischen und linearen Oligomeren [-Si(CH₃)(CH₂OH)O-]ₛ mit **s** = 4 bis 21.
- ¹H-NMR (DMSO-d₆) :: 0,14 ppm (breit, 3 H, Si-CH₃), 3,09 + 3,3...3,5 ppm (breit, 2 H, Si-CH₂-O), 4,22 ppm (t/breit, 1 H, OH)
- ¹³C-NMR (DMSO-d₆):: -0,5...-1,0 ppm (breit, 1 C, Si-CH₃), 53,7...54,0 ppm (breit, 1 C, Si-CH₂-OH)
- ²⁹Si-NMR (DMSO-d₆):: -19,5...-20,5 ppm (s, >6 x, Cyclen, 29%), -21,0...-23,0 ppm (s, >10 x, teilweise breit, lineare Verbindungen, 71%)

### Beispiel 2

### Herstellung einer Verbindung der allgemeinen Formel I

**Basisch katalysierte Hydrolyse von 2,2,5,5-Tetramethoxy-1,4-dioxa-2,5-disilacyclohexan** Ein Gemisch aus 0,40 g (22,1 mmol) Wasser, 1,50 mL (20,0 mmol NH₃, 56,6 mmol H₂O) 25%iger Ammoniaklösung und 94 mL Methanol wurde unter Einleiten von Argon im Ultraschallbad entgast. Zu der Lösung wurden 4,38 g (18,2 mmol) 2,2,5,5-Tetramethoxy-1,4-dioxa-2,5-disilacyclohexan (**5**) langsam zugetropft. Das Reaktionsgemisch wurde 1 d bei RT gerührt. Der dabei entstandene weiße Feststoff (2,39 g, 79%) wurde abfiltriert, mit Methanol gewaschen und im Vakuum getrocknet.
- Elementaranalyse:: C 12,26%, H 3,70%, Si 40,49%
- ¹³C-Festkörper-NMR:: 51,0 ppm (CH₂, sehr scharfer Peak)
- ²⁹Si-Festkörper-NMR:: -75,2 ppm (~90%, O_{3/2}SiCH₂OH), -66,4 ppm (Schulter, -10%, (HO)O_{2/2}SiCH₂OH)
- Oberfläche (BET):: 132 m²/g
mittlere Teilchengröße (Lichtstreuung): 296 nm

### Beispiel 3

### Herstellung einer Verbindung der allgemeinen Formel I

### Basisch katalysierte Dispersionshydrolyse von 2,2,5,5-Tetramethoxy-1,4-dioxa-2,5-disilacyclohexan

Eine Wasser-in-Öl Mikroemulsion wurde hergestellt, indem 1,67 g (3,74 mmol) Natrium-1,2-bis-(2-ethylhexyloxycarbonyl)-1-ethansulfonat (AOT), 0,45 g (24,96 mmol) Wasser, 4,67 mg (83,2 µmol) Kaliumhydroxid sowie 7,5 g (74,9 mmol) n-Heptan im Ultraschallbad unter Einleiten von Argon entgast und die Substanzen dabei vermischt wurden. Es entstand eine klare, transparente Lösung, die mindestens über mehrere Stunden stabil war. Zu dieser Lösung wurden 1,00 g (4,16 mmol) 2,2,5,5-Tetramethoxy-1,4-dioxa-2,5-disilacyclohexan (**5**) zugetropft. Das Reaktionsgemisch wurde 14 h bei Raumtemperatur gerührt. Dann wurde der ausgefallene weißer Feststoff im Ultraschallbad homogenisiert und suspendiert, anschließend abfiltriert und mit Heptan und Ethanol mehrmals gewaschen. Der weiße Feststoff (562 mg, 81%) wurde im Vakuum getrocknet.
- Elementaranalyse:: C 13,84%, H 3,79%, Si 32,06% ~> [(HO)_{0,3}O_{2,7/2}SiCH₂OH]
- ¹³C-Festkörper-NMR:: 51,4 ppm (CH₂, sehr scharfer Peak)
- ²⁹Si-Festkörper-NMR:: -75,5 ppm (~90%, O_{3/2}SiCH₂OH), -65,8 ppm (Schulter, ~10%, (HO)O_{2/2}SiCH₂OH)
- Oberfläche (BET):: 298 m²/g
mittlere Teilchengröße (Lichtstreuung): 524 nm

### Beispiel 4

### Herstellung einer Verbindung der allgemeinen Formel I

### Unkatalysierte Cohydrolyse von 2,5-Dimethoxy-2,5-dimethyl-l,4-dioxa-2,5-disilacyclohexan und Dimethoxydimethylsilan

5,2 g (25 mmol) 2,5-Dimethoxy-2,5-dimethyl-1,4-dioxa-2,5-disila-cyclohexan (**1**) und 6,0 g (50 mmol) Dimethoxydimethylsilan wurden in 40 ml Methanol gelöst, mit 2 ml (2,0 g, 111 mmol) Wasser versetzt und bei Raumtemperatur gerührt. Nach 1 d zeigte das ¹H-NMR-Spektrum vollständigen Umsatz an. Das Lösungsmittel und überschüssiges Wasser wurden am Rotationsverdampfer entfernt. Es verblieben 8,1 g (99%) einer farblosen viskosen Flüssigkeit, die in Wasser, DMSO, MeOH, EtOH, Diethylether, THF, Aceton, CH₂Cl₂, CHCl₃ und Acetonitril gut löslich und in Toluol schlecht löslich war. Sie bestand lt. Massenspektrum aus cyclischen und linearen Oligomeren [-Si(CH₃)₂O-]ₚ-[-Si(CH₃)(CH₂OH)O-]ₛ mit **p** + **s** = 4 bis mindestens 18 und **s** = 2 bis (**p** + **s**).
- ¹H-NMR (CDCl₃) :: 0,1...0,2 ppm (breit, 9 H, Si-CH₃), 3,3 + 3,45...3,6 ppm (breit, 2 H, Si-CH₂-O)
- ¹³C-NMR (CDCl₃):: -5...-4 + -3...-1,5 + -0,5...1 ppm (breit, 3 C, Si-CH₃), 52,5...53 + 53,5...54,5 ppm (breit, 1 C, Si-CH₂-OH)
- ²⁹Si-NMR (CDCl₃):: -30...-25 ppm (SiMe(CH₂OH)O, breit, 45%), -23...-15 ppm (SiMe₂O + SiMe(CH₂OH)O, breit, 18%), -12...-6 ppm (SiMe₂O, breit, 32%), -5...5 ppm (teilweise breit, 5%)
- Viskosität:: 121,8 mPa*s

### Beispiel 5

### Herstellung einer Verbindung der allgemeinen Formel I

### Basisch katalysierte Hydrolyse von 2,2,5,5-Tetramethoxy-1,4-dioxa-2,5-disilacyclohexan und Tetramethylorthosilicat (TMOS)

Ein Gemisch aus 0,92 g (50,9 mmol) Wasser, 0,75 mL (10,0 mmol NH₃, 28,3 mmol H₂O) 25%iger Ammoniaklösung und 94 mL Methanol wurde unter Einleiten von Argon im Ultraschallbad entgast. Zu der Lösung wurden 2,58 g (16,9 mmol) TMOS zugetropft. Die Reaktionslösung wurde für 1 d bei Raumtemperatur gerührt. Zur Funktionalisierung der Silica-Partikel wurden 3,06 g (12,7 mmol) 2,2,5,5-Tetramethoxy-1,4-dioxa-2,5-disilacyclohexan (**5**) langsam zugetropft. Das Gemisch wurde 2 d bei Raumtemperatur gerührt. Der ausgefallene weiße Feststoff wurde abfiltriert, mit Methanol gewaschen und anschließend im Vakuum getrocknet (3,14 g, 100%).
- Elementaranalyse:: C 9,36%, H 3,00%, Si 35,48%
~> [(HO)_{0,53}O_{2,47/2}SiCH₂OH + 0,62 (HO)_{0,53}SiO_{3,47/2}]
- ¹³C-Festkörper-NMR:: 51,0 ppm (CH₂, sehr scharfer Peak)
- ²⁹Si-Festkörper-NMR:: -75,1 ppm (~50%, O_{3/2}SiCH₂OH), -66,1 ppm (Schulter, ~10%, (HO)O_{2/2}SiCH₂OH)
-110,9 ppm (~30%, SiO_{4/2}), -104,0 ppm (Schulter, ~10%, (HO)SiO_{3/2})
- Oberfläche (BET):: 470 m²/g
mittlere Teilchengröße (Lichtstreuung): 90% 30 nm, 10% 145 nm

### Beispiel 6

### Herstellung einer Verbindung der allgemeinen Formel I

### Basisch katalysierte Dispersionshydrolyse von 2,2,5,5-Tetramethoxy-1,4-dioxa-2,5-disilacyclohexan und Tetraethylorthosilicat (TEOS)

Eine Wasser-in-Öl Mikroemulsion wurde hergestellt, indem 10,0 g (22,5 mmol) Natrium-1,2-bis-(2-ethylhexyloxycarbonyl)-1-ethansulfonat (AOT), 2,50 g (138,8 mmol) Wasser, 0,5 mL (6,61 mmol NH₃, 18,9 mmol H₂O) 25%ige Ammoniaklösung sowie 57,8 mL Toluol im Ultraschallbad unter Einleiten von Argon entgast und die Substanzen dabei vermischt wurden. Es entstand eine klare, transparente Lösung, die mindestens über mehrere Stunden stabil war. Zu dieser Lösung wurden 0,95 g (4,56 mmol) TEOS zugetropft und das Reaktionsgemisch für 1 d bei Raumtemperatur gerührt. Anschließend wurden 0,83 g (3,46 mmol) 2,2,5,5-Tetramethoxy-1,4-dioxa-2,5-disilacyclohexan (**5**) zugetropft. Nach 1 d Rühren wurden die kolloidalen Silicapartikel zentrifugiert, zweimal mit Toluol gewaschen und im Vakuum getrocknet. Der weiße Feststoff (691 mg, 81%) war in Wasser löslich.
- ¹³C-Festkörper-NMR:: 55,3 ppm (CH₂, sehr scharfer Peak)
- ²⁹Si-Festkörper-NMR:: -75,3 ppm (O_{3/2}SiCH₂OH), -66,6 ppm (Schulter, (HO) O_{2/2}SiCH₂OH)
-110,5 ppm (SiO₄/₂), -100,5 ppm (Schulter, (HO) SiO_{3/2})
- Oberfläche (BET):: 72 m²/g
mittlere Teilchengröße (Lichtstreuung): 42% 44 nm, 58% 287 nm

## Patentansprüche

1. Verfahren zur Herstellung von poly(hydroxymethyl)-funktionellen Siloxanen der allgemeinen Formel I
(SiO_{4/2})ₖ(R¹SiO_{3/2})ₘ(R¹₂SiO_{2/2})ₚ(R¹₃SiO_{1/2})_{q}(O_{1/2}H)ₜ ((O_{1/2})_{2+y}SiR²_{1-y}-CH₂-OH]ₛ Formel I,
bei dem cyclische Verbindungen, die mindestens eine Einheit der allgemeinen Formel II
[SiR²(OR³)-CH₂-O]ₙ Formel II
aufweisen, mit Wasser umgesetzt werden, wobei optional eine oder mehrere weitere hydrolysierbare Verbindungen der allgemeinen Formel III
R¹_{3-z}SiY_{1+z} Formel III
anwesend sein können, und wobei
**R¹** ein Wasserstoffatom oder ein gegebenenfalls mit **Q¹** substituierter, gegebenenfalls durch eine oder mehrere Gruppen **Q²** unterbrochener oder eine oder mehrere Gruppen **Q²** enthaltender, cyclischer oder acyclischer, linearer oder verzweigter, aromatischer oder aliphatischer oder olefinischer, gesättigter oder ungesättigter C₁-C₂₀ Kohlenwasserstoffrest oder C₁-C₂₀ Kohlenwasserstoffoxyrest oder C₄-C₄₀ Polyetherrest ist,
**R²** ein gegebenenfalls mit **Q¹** substituierter, gegebenenfalls durch eine oder mehrere Gruppen **Q²** unterbrochener oder eine oder mehrere Gruppen **Q²** enthaltender, cyclischer oder acyclischer, linearer oder verzweigter, aromatischer oder aliphatischer oder olefinischer, gesättigter oder ungesättigter C₁-C₂₀ Kohlenwasserstoffrest oder C₁-C₂₀ Kohlenwasserstoffoxyrest oder C₄-C₄₀ Polyetherrest oder Si₁-Si₂₀ Siloxanoxyrest oder Hydroxy-Rest ist,
**R³** ein gegebenenfalls mit **Q¹** substituierter, gegebenenfalls durch eine oder mehrere Gruppen **Q²** unterbrochener oder eine oder mehrere Gruppen **Q²** enthaltender, cyclischer oder acyclischer, linearer oder verzweigter, aromatischer oder aliphatischer oder olefinischer, gesättigter oder ungesättigter C₁-C₂₀ Kohlenwasserstoffrest oder C₄-C₄₀ Polyetherrest oder Si₁-Si₂₀ Siloxanylrest oder Wasserstoff ist,
**Q¹** ein heteroatomhaltiger einbindiger Rest ist,
**Q²** ein heteroatomhaltiger zweibindiger Rest oder ein heteroatomhaltiger dreibindiger Rest ist,
**Y** eine über ein Heteroatom an das Silicium gebundene hydrolysierbare Gruppe bedeutet,
**k, m, p, q und t** größer oder gleich Null sind,
**s und n** größer als Null sind,
**y** den Wert 0 oder 1, und
**z** die Werte 0, 1, 2 oder 3 bedeutet.

2. Verfahren nach Anspruch 1, bei dem **R¹** und **R²** geradkettige oder verzweigte oder cyclische C₁-C₆ Kohlenwasserstoffreste oder C₁-C₆ Kohlenwasserstoffoxyreste sind und **R³** ein geradkettiger oder verzweigter oder cyclischer C₁-C₆ Kohlenwasserstoffrest ist.

3. Verfahren nach Anspruch 1 oder 2, bei dem die Verbindungen, die mindestens eine Einheit der Formel II aufweisen, ausgewählt werden aus Verbindungen **1** bis **6**

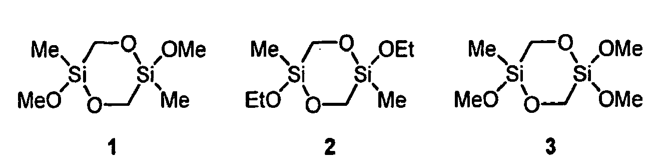

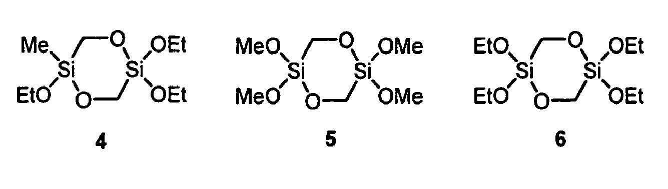

4. Verfahren nach Anspruch 1 bis 3, bei dem als zusätzliche hydrolysierbare Verbindungen der Formel III Verbindungen der Formel IIIa
R¹¹_{3-z}Si(OR⁵)_{1+z} Formel IIIa
verwendet werden, wobei
**R¹¹** Methyl, Ethyl, Vinyl, Allyl oder Phenyl und
**R⁵** Methyl, Ethyl, *n*-Propyl, *iso*-Propyl, *n*-Butyl, *iso*-Butyl, *sec*-Butyl, *tert*-Butyl, Formyl oder Acetyl bedeuten, und **z** die in Anspruch 1 angegebenen Werte annimmt.

5. Verfahren nach Anspruch 1 bis 4, bei dem ein Katalysator anwesend ist, der ausgewählt wird aus anorganischen oder organischen Brønstedt-Säuren oder Brønstedt-Basen oder anorganischen oder organischen Lewis-Säuren oder Lewis-Basen.

6. Verfahren nach Anspruch 1 bis 5, das in Anwesenheit von oberflächenaktiver Substanz durchgeführt wird.

7. Verfahren nach Anspruch 1 bis 6, das in Gegenwart eines oder mehrerer Lösungsmittel ausgeführt wird.

8. Verfahren nach Anspruch 1 bis 7, welches bei 0 °C bis 100 °C, durchgeführt wird.

9. Verfahren nach Anspruch 1 bis 3 oder 5 bis 8, bei dem poly(hydroxymethyl)-funktionelle Siloxane der allgemeinen Formel I mit k = m = p = q = 0 hergestellt werden.

10. Poly(hydroxymethyl)-funktionelle Siloxane der allgemeinen Formel Ia
(SiO_{4/2})ₖ(R¹SiO_{3/2})ₘ(R¹₂SiO_{2/2})ₚ(R¹₃SiO_{1/2})ᵤ[O_{1/2}H]ᵥ (O_{1/2}SiR²²₂-CH₂-OH)₁[(O_{1/2})_{2+y}SiR²_{1-y}-CH₂-OH]ₛ Formel Ia,
wobei
**R¹, R², Q¹, Q², k, m, p, y und s** Bedeutungen und Werte annehmen können wie in Anspruch 1 definiert,
**R²²** einen gegebenenfalls mit **Q¹** substituierten, gegebenenfalls durch eine oder mehrere Gruppen **Q²** unterbrochenen oder eine oder mehrere Gruppen **Q²** enthaltenden, cyclischen oder acyclischen, linearen oder verzweigten, aromatischen oder aliphatischen oder olefinischen, gesättigten oder ungesättigten C₁-C₂₀ Kohlenwasserstoffrest oder C₁-C₂₀ Kohlenwasserstoffoxyrest oder C₄-C₄₀ Polyetherrest bedeutet,
**1** größer als Null ist,
**u und v** größer oder gleich Null sind und das Verhältnis von **s** zur Summe von **k, m, p** und **u** im Bereich 1:10000 bis 10000:1 liegt.

## Claims

1. Method for preparing poly(hydroxymethyl)-functional siloxanes of the general formula I
(SiO_{4/2})ₖ(R¹SiO_{3/2})ₘ(R¹₂SiO_{2/2})ₚ(R¹₃SiO_{1/2})_{q}(O_{1/2}H)ₜ [(O_{1/2})_{2+y}SiR²_{1-y}-CH₂-OH]ₛ Formula I,
which comprises reacting cyclic compounds having at least one unit of the general formula II
[SiR²(OR³)-CH₂-O]ₙ Formula II
with water, wherein optionally one or more further hydrolyzable compounds of the general formula III
R¹_{3-z}SiY_{1+z} Formula III
may be present, and wherein
**R¹** is a hydrogen atom or a cyclic or acyclic, linear or branched, aromatic or aliphatic or olefinic, saturated or unsaturated C₁-C₂₀ hydrocarbon residue or C₁-C₂₀ hydrocarbonoxy residue or C₄-C₄₀ polyether residue, each optionally substituted with **Q¹,** optionally interrupted by one or more groups **Q²** or comprising one or more groups **Q²,**
**R²** is a hydroxyl residue or a cyclic or acyclic, linear or branched, aromatic or aliphatic or olefinic, saturated or unsaturated C₁-C₂₀ hydrocarbon residue or C₁-C₂₀ hydrocarbonoxy residue or C₄-C₄₀ polyether residue or Si₁-Si₂₀ siloxanoxy residue, each optionally substituted with **Q¹,** optionally interrupted by one or more groups **Q²** or comprising one or more groups **Q²,**
**R³** is hydrogen or a cyclic or acyclic, linear or branched, aromatic or aliphatic or olefinic, saturated or unsaturated C₁-C₂₀ hydrocarbon residue or C₄-C₄₀ polyether residue or Si₁-Si₂₀ siloxanyl residue, each optionally substituted with **Q¹,** optionally interrupted by one or more groups **Q²** or comprising one or more groups **Q²,**
**Q¹** is a heteroatom-containing monovalent residue,
**Q²** is a heteroatom-containing divalent residue or a heteroatom-containing trivalent residue,
**Y** is a hydrolyzable group attached to the silicon via a heteroatom,
**k, m, p, q and t** are greater than or equal to zero,
**s and n** are greater than zero,
**y** is 0 or 1, and
**z** is 0, 1, 2 or 3.

2. Method according to Claim 1, in which **R¹** and **R²** are straight-chain or branched or cyclic C₁-C₆ hydrocarbon residues or C₁-C₆ hydrocarbonoxy residues and **R³** is a straight-chain or branched or cyclic C₁-C₆ hydrocarbon residue.

3. Method according to Claim 1 or 2, in which the compounds having at least one unit of the formula II are selected from compounds **1** to **6**

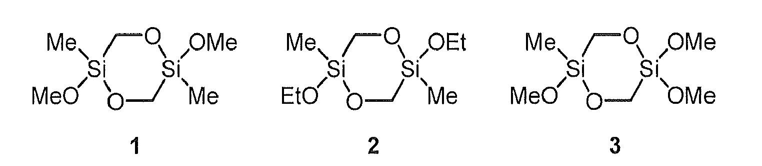

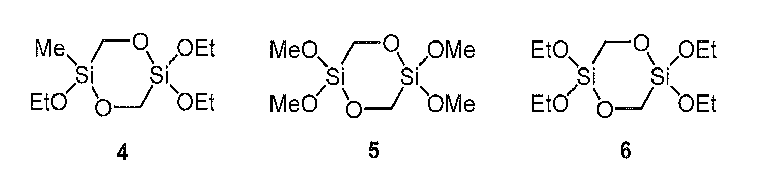

4. Method according to Claim 1 to 3, in which compounds of the formula IIIa
R¹¹_{3-z}Si(OR⁵)_{1+z} Formula IIIa
are used as additional hydrolyzable compounds of the formula III, wherein
**R¹¹** is methyl, ethyl, vinyl, allyl or phenyl and
**R⁵** is methyl, ethyl, *n*-propyl, *iso*propyl, *n*-butyl, *iso*butyl, *sec*-butyl, *tert*-butyl, formyl or acetyl, and **z** has the values stated in Claim 1.

5. Method according to Claim 1 to 4, in which a catalyst is present, selected from inorganic or organic Brønsted acids or Brønsted bases or inorganic or organic Lewis acids or Lewis bases.

6. Method according to Claim 1 to 5, which is carried out in the presence of a surface-active substance.

7. Method according to Claim 1 to 6, which is conducted in the presence of one or more solvents.

8. Method according to Claim 1 to 7, which is carried out at 0°C to 100°C.

9. Method according to Claim 1 to 3 or 5 to 8, in which poly(hydroxymethyl)-functional siloxanes of the general formula I are prepared with k = m = p = q = 0.

10. Poly(hydroxymethyl)-functional siloxanes of the general formula Ia
(SiO_{4/2})ₖ(R¹SiO_{3/2})ₘ(R¹₂SiO_{2/2})ₚ(R¹₃SiO_{1/2})ᵤ[O_{1/2}H]ᵥ (O_{1/2}SiR²²₂-CH₂-OH)₁[(O_{1/2})_{2+y}SiR²_{1-y}-CH₂-OH]ₛ Formula Ia,
wherein
**R¹, R², Q¹, Q², k, m, p, y** and **s** can have meanings and values as defined in Claim 1,
**R²²** is a cyclic or acyclic, linear or branched, aromatic or aliphatic or olefinic, saturated or unsaturated C₁-C₂₀ hydrocarbon residue or C₁-C₂₀ hydrocarbonoxy residue or C₄-C₄₀ polyether residue, optionally substituted with **Q¹,** optionally interrupted by one or more groups **Q²** or comprising one or more groups **Q²,**
**1** is greater than zero,
**u** and **v** are greater than or equal to zero
and the ratio of **s** to the sum of **k, m, p** and **u** is in the range from 1:10 000 to 10 000:1.

## Revendications

1. Procédé pour la préparation de siloxanes à fonctionnalité poly(hydroxyméthyle) de formule générale I :
(SiO_{4/2})ₖ(R¹SiO_{3/2})ₘ(R¹₂SiO_{2/2})ₚ(R¹₃SiO_{1/2})_{q} (O_{1/2}H)ₜ[(O_{1/2})₂₊ySiR² _{1-y}-CH₂-OH]ₛ Formule I
dans lequel des composés cycliques, qui présentent au moins une unité de formule générale II
(SiR²(OR³)CH₂-O]ₙ Formule II
sont transformés avec de l'eau, un ou plusieurs autres composés hydrolysables de formule générale III
R_{3-z}SiY_{1+z} Formule III
pouvant éventuellement être présents, et
R¹ représentant un atome d'hydrogène ou un radical hydrocarboné en C₁-C₂₀, un radical hydrocarboné en C₁-C₂₀ à fonctionnalité oxy ou un radical polyéther en C₄-C₄₀, cycliques ou acycliques, linéaires ou ramifiés, aromatiques ou aliphatiques ou oléfiniques, saturés ou insaturés le cas échéant substitués par Q¹, le cas échéant interrompus par un ou plusieurs groupes Q² ou contenant un ou plusieurs groupes Q²,
R² représentant un radical hydrocarboné en C₁-C₂₀, un radical hydrocarboné en C₁-C₂₀ à fonctionnalité oxy ou un radical polyéther en C₄-C₄₀ ou un radical Si₁-Si₂₀-silanoxy, cycliques ou acycliques, linéaires ou ramifiés, aromatiques ou aliphatiques ou oléfiniques, saturés ou insaturés le cas échéant substitués par Q¹, le cas échéant interrompus par un ou plusieurs groupes Q² ou contenant un ou plusieurs groupes Q² ou un radical hydroxy,
R³ représentant un radical hydrocarboné en C₁-C₂₀ ou un radical polyéther en C₄-C₄₀, ou un radical Si₁-Si₂₀-siloxanyle, cycliques ou acycliques, linéaires ou ramifiés, aromatiques ou aliphatiques ou oléfiniques, 1 saturés ou insaturés le cas échéant substitués par Q¹, le cas échéant interrompus par un ou plusieurs groupes Q² ou contenant un ou plusieurs groupes Q² ou hydrogène,
Q¹ représentant un radical monovalent contenant des hétéroatomes,
Q² représentant un radical divalent contenant des hétéroatomes ou un radical trivalent contenant des hétéroatomes,
Y signifiant un groupe hydrolysable lié au silicium via un hétéroatome,
k, m, p, q et t étant supérieurs ou égaux à zéro,
s et n étant supérieurs à zéro,
y valant 0 ou 1, et
z signifiant les valeurs 0, 1, 2 ou 3.

2. Procédé selon la revendication 1, dans lequel R¹ et R² représentent des radicaux hydrocarbonés en C₁-C₆ ou des radicaux hydrocarbonés à fonctionnalité oxy en C₁-C₆, linéaires ou ramifiés ou cycliques et R³ représente un radical hydrocarboné en C₁-C₆ linéaire ou ramifié ou cyclique.

3. Procédé selon la revendication 1 ou 2, dans lequel les composés, qui présentent au moins une unité de formule II, sont choisis parmi les composés 1 à 6

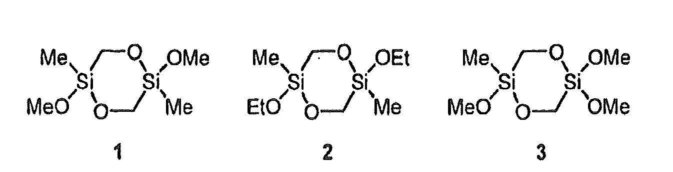

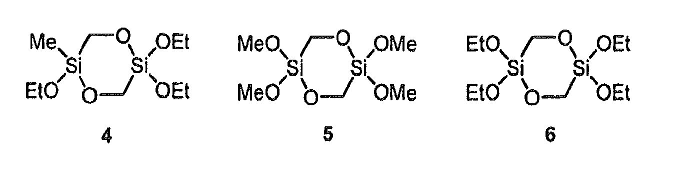

4. Procédé selon la revendication 1 à 3, dans lequel on utilise, comme composés hydrolysables supplémentaires de formule III, des composés de formule IIIa
R¹¹_{3-z}Si(OR⁵)_{1+z} Formule IIIa
R¹¹ signifiant méthyle, éthyle, vinyle, allyle ou phényle et
R⁵ signifiant méthyle, éthyle, n-propyle, iso-propyle, n-butyle, iso-butyle, sec-butyle, tert-butyle, formyle ou acétyle et z présentant les valeurs indiquées dans la revendication 1.

5. Procédé selon la revendication 1 à 4, dans lequel est présent un catalyseur qui est choisi parmi les acides ou les bases inorganiques ou organiques de Brönstedt ou les acides ou les bases inorganiques ou organiques de Lewis.

6. Procédé selon la revendication 1 à 5, qui est réalisé en présence d'une substance tensioactive.

7. Procédé selon la revendication 1 à 6, qui est réalisé en présence d'un ou de plusieurs solvants.

8. Procédé selon la revendication 1 à 7, qui est réalisé à 0°C jusqu'à 100°C.

9. Procédé selon la revendication 1 à 3 ou 5 à 8, dans lequel on prépare des siloxanes à fonctionnalité poly(hydroxyméthyle) de formule générale I, avec k = m = p = q = 0.

10. Siloxanes à fonctionnalité poly(hydroxyméthyle) de formule générale Ia
(SiO_{4/2})ₖ(R¹SiO_{3/2})ₘ(R¹₂SiO_{2/2})ₚ(R¹₃SiO_{1/2})ᵤ[O_{1/2}H]ᵥ(O_{1/2}SiR²²₂-CH₂-OH)₁[(O_{1/2})_{2+y}SiR²_{1-y}-CH₂-OH]ₛ Formule Ia
R¹, R², Q¹, Q², k, m, p, y et s pouvant présenter les significations et les valeurs telles que définies dans la revendication 1,
R²² signifiant un radical hydrocarboné en C₁-C₂₀, un radical hydrocarboné en C₁-C₂₀ à fonctionnalité oxy ou un radical polyéther en C₄-C₄₀, cycliques ou acycliques, linéaires ou ramifiés, aromatiques ou aliphatiques ou oléfiniques, saturés ou insaturés le cas échéant substitués par Q¹, le cas échéant interrompus par un ou plusieurs groupes Q² ou contenant un ou plusieurs groupes Q²,
l étant supérieur à zéro,
u et v étant supérieurs ou égaux à zéro, et le rapport de s à la somme de k, m, p et u se situant dans la plage de 1:10 000 à 10 000:1.
